Europäisches Patentamt

(19) European Patent Office

Office européen des brevets

(11) Veröffentlichungsnummer: **0 023 951**
**B1**

(12) **EUROPÄISCHE PATENTSCHRIFT**

(51) Int. Cl.³: **B 25 F 3/00**

(45) Veröffentlichungstag der Patentschrift:
**31.08.83**

(21) Anmeldenummer: **80102956.2**

(22) Anmeldetag: **28.05.80**

(54) Motorgetriebenes Handwerkzeug, insbesondere Heimwerkerkombinationsmaschine.

(30) Priorität: **10.08.79 DE 2932470**

(43) Veröffentlichungstag der Anmeldung:
**18.02.81 Patentblatt 81/7**

(45) Bekanntmachung des Hinweises auf die Patenterteilung:
**31.08.83 Patentblatt 83/35**

(84) Benannte Vertragsstaaten:
**CH DE FR GB LI NL**

(56) Entgegenhaltungen:
**DE-A-2 825 023**
**DE-B-1 289 800**
**DE-C-730 619**

(73) Patentinhaber: **SCINTILLA AG, CH-4500 Solothurn (CH)**

(72) Erfinder: **Holzer, Peter, Berntorstrasse 16,**
**CH-4500 Solothurn (CH)**

(74) Vertreter: **Landstorfer, Rudolf, Dipl.-Ing. et al,**
**Wielandstrasse 16, D-7000 Stuttgart 1 (DE)**

Motorgetriebenes Handwerkzeug, insbesondere Heimwerkerkombinationsmaschine

Stand der Technik

Die Erfindung geht aus von einem motorgetriebenen Handwerkzeug, insbesondere einer Heimwerker-Kombinationsmaschine, nach der Gattung des Hauptanspruchs. Während der Rechtslauf der Arbeitsspindel die normale und gebräuchliche Arbeitsdrehrichtung des Handwerkzeugs ist, wird der Linkslauf der Arbeitsspindel vorwiegend im Zusammenhang mit an das Handwerkzeug angesetzten Schrauben verwendet, und zwar hier meistens zum Herausdrehen von Schrauben, mitunter aber auch zum Einschrauben von linksgängigen Schrauben.

Bei einer bekannten Bohrmaschine mit Rechts- und Linkslauf besteht die Möglichkeit, an den Spannhals der Bohrmaschine Vorsatz- oder Zusatzgeräte, wie Sägen, Fräsen od.dgl., anzusetzen, um so diese Bohrmaschine für weitere Zwecke verwenden zu können. Dabei ist es möglich, bei montiertem Vorsatzgerät die Arbeitsspindel mit Linkslauf anzutreiben. Eine Rotation der Vorsatzgeräte, wie Kreissägen oder Fräsen, im Linkslauf führt aber nicht nur zu einer Zerstörung des Vorsatzgerätes, sondern auch zu einer erheblichen Gefährdung des Benutzers des Handwerkzeugs.

Bekannte Bohrmaschinen dieser Art werden mitunter auch mit einer Zusatzeinrichtung, wie Schlagbohrwerk od.dgl., ausgestattet. Wird mit eingerücktem Schlagbohrwerk und Linkslauf der Arbeitsspindel gebohrt, so führt dies unweigerlich zur Zerstörung des Hartmetallbohrers.

Vorteile der Erfindung

Das erfindungsgemässe motorgetriebene Handwerkzeug, insbesondere Heimwerker-Kombinationsmaschine, mit den kennzeichnenden Merkmalen des Hauptanspruchs hat demgegenüber den Vorteil, dass eine Beschädigung von mit dem Handwerkzeug angetriebenen Werkzeugen, wie Bohrer, Fräsen, Sägen od.dgl., und auch eine Gefährdung des Benutzers des Handwerkzeugs durch gewollten oder versehentlich eingeschalteten Linkslauf der Arbeitsspindel mit Sicherheit verhindert wird. Bei eingerücktem Schlagbohrwerk und/oder bei angesetzten Vorsatzgeräten, die nicht für Linkslauf geeignet sind, wird bei dem erfindungsgemässen Handwerkzeug automatisch dem Benutzer die Möglichkeit genommen, am Handwerkzeug den Linkslauf der Arbeitsspindel einzuschalten. Umgekehrt ist der Benutzer zunächst gezwungen, den Rechtslauf für die Arbeitsspindel einzuschalten, will er das Schlagbohrwerk einrücken und/oder Vorsatzgeräte an das Handwerkzeug ansetzen, die nicht für Linkslauf ausgelegt sind. Bei dem erfindungsgemässen Handwerkzeug ergibt sich darüber hinaus der weitere Vorteil, dass die erfindungsgemässe Sperrvorrichtung für den Linkslauf keine Änderung im Aufbau des Handwerkzeugs erfordert und mit relativ wenig Mitteln erzielt werden kann. Sowohl der Motoraufbau als auch der an sich bekannte klassische Getriebeaufbau mit seinen Konstruktionselementen, wie Sicherheitskupplung, Gangschaltgetriebe od.dgl., können unverändert beibehalten werden.

Durch die in den Unteransprüchen aufgeführten Massnahmen sind vorteilhafte Weiterbildungen und Verbesserungen des im Hauptanspruch angegebenen Handwerkzeugs möglich. Besonders vorteilhaft sind dabei die Ausführungsformen der Erfindung nach den Ansprüchen 5 bis 13, die jede für sich oder in Kombination eine konstruktiv einfache und preiswerte Realisierung der erfindungsgemässen Sperrvorrichtung ermöglichen.

Zeichnung

Ausführungsbeispiele der Erfindung sind in der Zeichnung dargestellt und in der nachfolgenden Beschreibung näher erläutert. Dabei zeigen:

Fig. 1 eine Seitenansicht einer Heimwerker-Kombinationsmaschine, ausschnittweise und teilweise geschnitten,

Fig. 2 einen Schnitt längs der Linie II–II in Fig. 1,

Fig. 3 einen Schnitt längs der Linie III–III in Fig. 1, ausschnittweise,

Fig. 4 eine Draufsicht eines Spannhalses der Kombinationsmaschine in Richtung Pfeil IV in Fig. 1, ausschnittweise,

Fig. 5 einen Schnitt längs der Linie V–V in Fig. 4,

Fig. 6 eine Draufsicht auf den Spannhals der Kombinationsmaschine gemäss einem zweiten Ausführungsbeispiel,

Fig. 7 einen Schnitt längs der Linie VII–VII in Fig. 6.

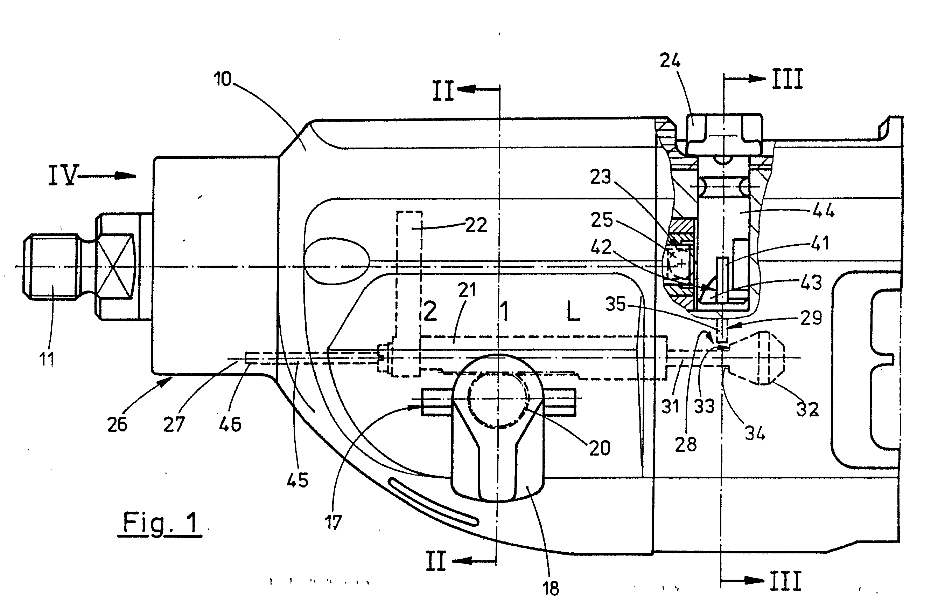

Beschreibung der Ausführungsbeispiele Die in den Fig. 1 bis 5 als Beispiel für ein elektromotorisch angetriebenes Handwerkzeug dargestellte Heimwerker-Kombinationsmaschine weist ein Gehäuse 10 und eine im Gehäuse 10 gelagerte Arbeitsspindel 11 auf. Die Arbeitsspindel 11 wird über ein Zahnradgetriebe 12 von einem nicht dargestellten Elektromotor angetrieben. Dabei kann die Arbeitsspindel 11 sowohl in Linkslauf als auch in Rechtslauf angetrieben werden. In bekannter Weise weist das Zahnradgetriebe 12 ein Vorgelege 13 auf, das üblicherweise über eine Sicherheitskupplung vom Elektromotor angetrieben wird. Auf der Arbeitsspindel 11 sitzen je nach Anzahl der vorgesehenen Ganggeschwindigkeiten Zahnräder 14, die wahlweise mittels eines Ziehkeiles 19 drehfest mit der Arbeitsspindel 11 gekoppelt werden können.

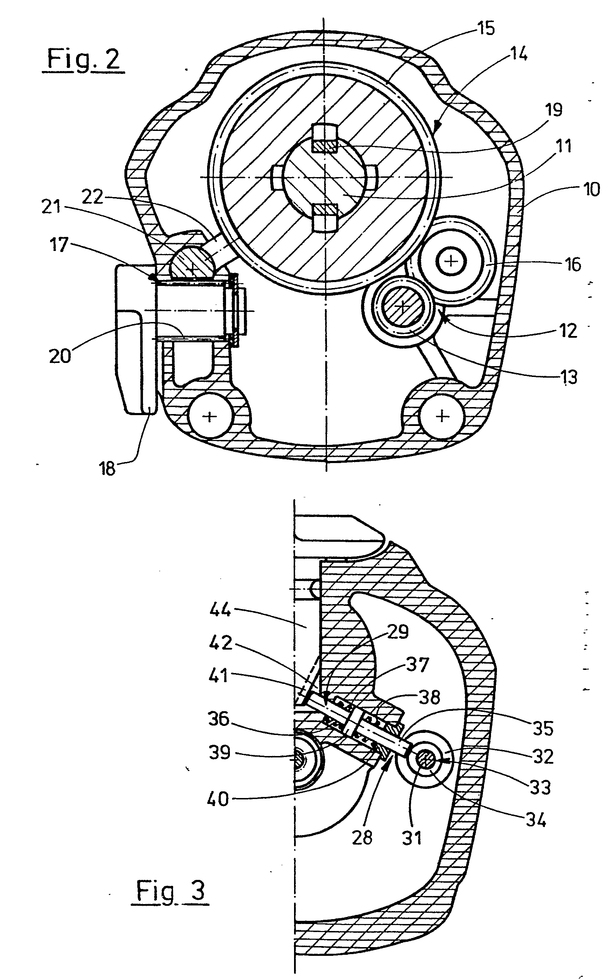

Im vorliegenden Ausführungsbeispiel sind zwei Ganggeschwindigkeiten der Arbeitsspindel 11 im Rechtslauf (in Fig. 1 mit «1» und «2» bezeichnet) und eine Ganggeschwindigkeit der Arbeitsspindel 11 im Linkslauf (in Fig. 1 mit «L» gekennzeichnet) vorgesehen. Demzufolge sitzen auf der Arbeitsspindel 11 zwei Zahnräder 14, von welchen das Zahnrad 15 in Fig. 2 zu sehen ist. Das Zahnrad 15 treibt bei drehfester Verbindung mit der Arbeitsspindel 11 diese in Linkslauf an und steht hierzu über ein Wenderad 16 mit dem Vorgelege 13 in

Eingriff. Die beiden anderen Zahnräder 14 kämmen unmittelbar mit dem Vorgelege 13 und bewirken bei ihrer drehfesten Verbindung mit der Arbeitsspindel 11 einen Antrieb dieser in Rechtslauf mit zwei unterschiedlichen Drehzahlen.

Zum Umschalten des Getriebes greift an dem Zahnradgetriebe 12 eine Drehrichtungs-Umschalteinrichtung 17 (Fig. 1 und 2) an, die im Ausführungsbeispiel auch gleichzeitig zur Umschaltung der Gangzahl im Rechtslauf der Arbeitsspindel 11 dient. Diese Drehrichtungs-Umschalteinrichtung 17 weist einen Umschalter 18 auf, der zumindest eine Schaltstellung für Rechtslauf, hier zwei Schaltstellungen für Rechtslauf «1» «2» und eine Schaltstellung für Linkslauf «L» hat. Der Umschalter 18 ist in seine Schaltstellungen manuell überführbar. Hierzu ist der Umschalter 18 schwenkbeweglich im Gehäuse 10 gelagert und mit einem Zahnsegment 20, das hier als Vollzahnkranz ausgebildet ist, versehen, das in einer axial verschieblich geführten Zahnstange 21 kämmt. Die Zahnstange 21 trägt einen Schaltfinger 22, der an dem Ziehkeil 19 angreift und diesen entsprechend der Stellung des Umschalters 18 axial verschiebt, so dass das jeweilige Zahnrad 14 über den Ziehkeil 19 drehfest mit der Arbeitsspindel 11 verbunden ist.

Die Kombinationsmaschine weist ein an sich bekanntes Schlagbohrwerk 23 auf, das ausschnittweise in Fig. 1 zu sehen ist. Zum Ein- und Ausrücken des Schlagbohrwerkes 23 ist ein Einstellbolzen 24 vorgesehen, der als Drehzapfen ausgebildet ist und eine Ein- und eine Ausrückstellung für das Schlagbohrwerk 23 aufweist, die in Umfangsrichtung um ca. 180° gegeneinander versetzt sind. In Fig. 1 ist der Einstellbolzen 24 in seiner Schlagbohrwerk-Ausrückstellung dargestellt. In dieser Stellung wird das Schlagbohrwerk 23 über die Kugel 25 blockiert.

Das Gehäuse 10 der Kombinationsmaschine weist an der Austrittsöffnung der Arbeitsspindel 11 aus dem Gehäuse 10 einen ringförmigen Spannhals 26 auf, dessen Mantel eine Aufnahmefläche 27 zur Halterung von Vorsatz- oder Zusatzgeräten, wie Säge, Fräse od. dgl., bildet. Bei einer Vorsatzkreissäge z.B. wird zwar das Sägeblatt drehfest mit der Arbeitsspindel 11 verbunden, jedoch die Halterung für den Führungsrahmen auf den Spannhals 26 aufgeschoben und dort festgeklemmt. Dabei ist die Halterung des Führungsrahmens im wesentlichen formgenau dem Spannhals 26 angepasst.

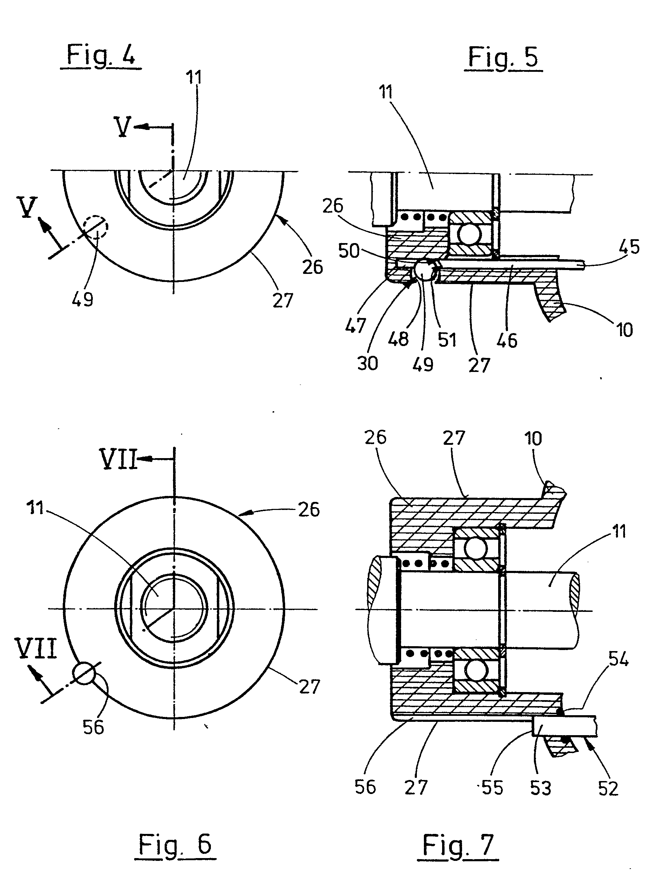

Zur Verhinderung des Linkslaufs der Arbeitsspindel 11 bei eingerücktem Schlagbohrwerk 23 und/oder am Spannhals 26 gehaltenem Vorsatzgerät weist die Kombinationsmaschine eine Sperrvorrichtung 28 auf, die mit dem Umschalter 18 gekoppelt ist. Teil dieser Sperrvorrichtung 28 ist ein Sperrglied 29, das mit dem Schlagbohrwerk 23 derart in Eingriff steht, dass bei Stellung des Umschalters 18 in seiner Linkslauf-Schaltstellung «L» das Einrücken des Schlagbohrwerkes 23 und umgekehrt bei eingerücktem Schlagbohrwerk 23 das Überführen des Umschalters 18 in seine Linkslauf-Schaltstellung «L» blockiert ist (Fig. 1 und 3). Die Sperrvorrichtung 28 weist noch ein weiteres Sperrglied 30 auf (Fig. 4 und 5), das an oder in unmittelbarer Nähe der Aufnahmefläche 27 am Spannhals 26 derart angeordnet ist, dass bei Stellung des Umschalters 18 in seiner Linkslauf-Schaltstellung «L» das Aufschieben eines Vorsatzgerätes auf die Aufnahmefläche 27 am Spannhals 26 und umgekehrt bei auf dem Spannhals 26 aufgesetztem Vorsatzgerät das Überführen des Umschalters 18 in dessen Linkslauf-Schaltstellung «L» blockiert ist. Je nachdem, ob das Elektrohandwerkzeug eine Kombinationsmaschine ohne Schlagbohrwerk 23 oder lediglich eine Schlagbohrmaschine ohne die Möglichkeit des Ansetzens von Vorsatzgeräten ist, kann natürlich eines der beiden Sperrglieder 29, 30 fehlen.

Die beiden Sperrglieder 29 und 30 weisen jeweils zwei Blockierstellungen auf. Das Sperrglied 29 ist derart angeordnet und ausgebildet, dass es in die eine Blockierstellung durch Betätigen des Umschalters 18 und in die andere Blockierstellung durch Einrücken des Schlagbohrwerkes 23 überführbar ist und in der jeweiligen Blockierstellung seine gegensinnige Betätigung blockiert, d.h. ist das Sperrglied 29 über den Umschalter 18 in die eine Blockierstellung überführt worden, so ist es in dieser Blockierstellung gegen eine Betätigung, die notwendig ist zum Einrücken des Schlagbohrwerkes 23, blockiert. In gleicher Weise ist das Sperrglied 30 derart angeordnet und ausgebildet, dass es in die eine Blockierstellung durch Betätigen des Umschalters 18 und in die andere Blockierstellung durch Aufschieben von Vorsatzgeräten auf den Spannhals 26 überführbar ist und ebenfalls in der jeweiligen Blockierstellung seine gegensinnige Betätigung blockiert.

Wie in Fig. 1 strichliniert eingezeichnet ist, weist die Sperrvorrichtung 28 einen über die Zahnstange 21 getrieblich mit dem Umschalter 18 verbundenen Stössel 31 auf, der in Eingriff mit dem Sperrglied 29 steht. Der Stössel 31 hat eine Sperrglied-Betätigungsfläche 32, die zur Stösselachse schräggestellt angeordnet und hier als Kegelstumpfmantel ausgebildet ist. Ausserdem weist der Stössel 31 noch eine Rastfläche 33 auf, hinter welcher das Sperrglied 29 einfallen kann (Fig. 1 und 3). Diese Rastfläche 33 ist hier als am Stössel 31 quer abstehende, die Sperrglied-Betätigungsfläche 32 stirnseitig begrenzende, ringförmige Anschlagschulter 34 ausgebildet. Das Sperrglied 29 ist hier als quer zum Stössel 31 axial verschiebbarer Sperrstift 35 ausgebildet. Wie in Fig. 3 zu sehen ist, ist der Sperrstift 35 in einer Stufenbohrung 36 im Inneren des Gehäuses 10 angeordnet und nimmt unter dem Einfluss zweier an ihm gegensinnig angreifender federelastischer Rückstellglieder, die hier als zylindrische Schraubenfeder 37 und 38 ausgebildet sind, eine Grundstellung ein. Dabei stützt sich die Schraubenfeder 37 einerseits an den Sperrstift 35, und zwar an einem mittig angeordneten Ringflansch 39, und anderseits an der Stufenschulter der Stufenbohrung 36 ab. Die Schraubenfeder 38 greift ebenfalls an dem Ringflansch 39 des Sperrstiftes 35 an und stützt sich anderseits an einer Verschlusshülse 40 ab, die stirnseitig in die Stufenbohrung 36 eingesetzt und dort gehalten ist und den Sperrstift 35 führt. Der Sperrstift 35 ermöglicht eine gegenseitige Kopplung des Stössels 31 und des Einstellbolzens 24 des Schlagbohrwerkes 23.

Der Einstellbolzen 24 weist eine Verriegelungsnut 41 auf (Fig. 1), die nur in der in Fig. 1 dargestellten Einrückstellung des Einstellbolzens 24 dem Sperrstift 35 zugekehrt ist. An die Vertiefungsnut 41 schliesst sich in Verstellrichtung des Einstellbolzens 24 eine Vertiefung 42 an, die von der Vertiefungsnut 41 zu der Aussenfläche 42 des Einstellbolzens 24 kontinuierlich überleitet und eine Sperrstift-Betätigungsfläche 43 bildet. In der in Fig. 3 gezeigten Grundstellung des Sperrstiftes 35 liegt dieser mit seinem einen Stirnende unmittelbar vor der Vertiefungsnut 41, ohne in diese einzutauchen, wobei das Stirnende über die Aussenkonturen des Einstellbolzens 24 bis in die Vertiefung 42 hineinragt. Das andere Stirnende des Sperrstiftes 35 weist einen im wesentlichen der Höhe der Anschlagschulter 34 entsprechenden Abstand von dem Stössel 31 auf (Fig. 1). Diese Grundstellung kann der Sperrstift 35 allerdings nur dann einnehmen, wenn der Einstellbolzen 24 seine in Fig. 1 dargestellte Schlagbohrwerk-Ausrückstellung eingenommen hat und der Umschalter 18 in seiner Rechtslauf-Schaltstellung steht, sei es – wie in Fig. 1 dargestellt – die Gang-Schaltstellung «1» oder die Gang-Schaltstellung «2».

Wird der Umschalter 18 in Fig. 1 entgegen Uhrzeigersinn geschwenkt und in seine Linkslauf-Schaltstellung «L» überführt, so wird über das Zahnsegment 20 die Zahnstange 21 nach links in Fig. 1 verschoben. Dadurch gleitet die Sperrglied-Betätigungsfläche 32 des Stössels 31 an der anliegenden Stirnfläche des Sperrstiftes 35 entlang und schiebt den Sperrstift 35 unter Zusammendrücken der Schraubenfeder 37 in die Vertiefungsnut 42 des Einstellbolzens 24. Verbleibt der Umschalter 18 in seiner Linkslauf-Schaltstellung «L», so verbleibt das Stirnende des Sperrstiftes 35 in der Vertiefungsnut 42 und der Einstellbolzen 24 ist blockiert. Das Schlagbohrwerk 23 ist damit in seiner unwirksamen Stellung arretiert und kann nicht eingerückt werden. Dies ist erst möglich, nachdem der Umschalter 18 wieder in eine seiner Rechtslauf-Schaltstellungen «1» oder «2» zurückgeführt worden ist, damit der Stössel 31 sich wieder nach rechts verschiebt und die Sperrglied-Betätigungsfläche 32 den Sperrstift 35 freigibt, so dass dieser unter der Rückstellwirkung der Schraubenfeder 37 in Fig. 3 dargestellte Grundstellung einnimmt.

Wird nunmehr in dieser Grundstellung des Sperrstiftes 35 der Einstellbolzen 24 entgegen Uhrzeigersinn in Fig. 1 gedreht, um das Schlagbohrwerk 23 einzurücken, so verschiebt die Sperrstift-Betätigungsfläche 43 der Vertiefung 42 den Sperrstift 35 entgegen der Rückstellkraft der Schraubenfeder 38. Schliesslich liegt die Stirnfläche des Sperrstiftes 35 auf der Aussenfläche 44 des Einstellbolzens 24 auf. Bei der vorstehend beschriebenen Verschiebung des Sperrstiftes 35 wird sein anderes Stirnende näher an den Stössel 31 herangeführt und greift hinter die Anschlagschulter 34 des Stössels 31. Damit ist die axiale Verschiebung des Stössels 31 begrenzt. Der Stössel 31 kann lediglich in Fig. 1 nach rechts verschoben werden, wodurch die Einschaltung des zweiten Rechtslauf-Ganges der Kombinationsmaschine mittels des Umschalters 18 ermöglicht wird. Ein Verschwenken des Umschalters 18 in seine Linkslauf-Schaltstellung «L» ist sicher verhindert, da eine Verschiebung der Zahnstange 21 und damit des Stössels 31 aus der in Fig. 1 gezeigten Stellung nach links durch Anlage der Anschlagschulter 34 an dem Sperrstift 35 blockiert ist. Bei eingerücktem Schlagbohrwerk 23 kann also der Linkslauf der Kombinationsmaschine nicht eingeschaltet werden. Dies ist wiederum erst dann möglich, nachdem der Einstellbolzen 24 wieder in seine Schlagbohrwerk-Ausrückstellung überführt worden ist, in welche die Vertiefung 42 und die Verriegelungsnut 41 im Einstellbolzen 24 eine Rückstellung des Sperrstiftes 35 in dessen Grundstellung ermöglichen.

Die Sperrvorrichtung 28 weist einen weiteren Stössel 45 auf, der ebenfalls wie der andere Stössel 31 starr mit der Zahnstange 21 verbunden ist (Fig. 1 und 5). Dieser Stössel 45 reicht mit einem Stösselabschnitt 45 bis hin zu der auf dem Spannhals 26 angeordneten Aufnahmefläche 27 für Vorsatzgeräte. Im Spannhals 26 ist eine parallel zu der Arbeitsspindel 11 ausgerichtete Bohrung 47 vorgesehen, in welche der Stösselabschnitt 46 eintaucht (Fig. 5). Weiterhin ist im Spannhals 26 eine zu der Bohrung 47 quer angeordnete Käfigöffnung 48 vorgesehen, in welcher ein Verriegelungskörper, hier eine Sperrkugel 49, mit Radialspiel gehalten ist, die das bereits eingangs erwähnte Sperrglied 30 bildet. In der einen Blockierstellung des Sperrglieds 30 taucht die Sperrkugel 49 in die Bohrung 47 ein, und in der anderen Blockierstellung des Sperrgliedes 30 tritt die Sperrkugel 49 teilweise aus der Käfigöffnung 48 heraus und steht über der Aufnahmefläche 27 vor. In der zuletzt genannten Blockierstellung kann ein Vorsatzgerät nicht auf die Aufnahmefläche 27 des Spannhalses 26 aufgeschoben werden, da dieses an die herausragende Sperrkugel 49 anstösst und damit nicht auf den Spannhals 26 aufgeschoben werden kann. Auch der Stössel 45 weist ebenso wie der Stössel 31 eine Sperrglied-Betätigungsfläche 50 und eine Rastfläche 51 auf, die beide von dem keilartig auslaufenden Stirnende des Stössels gebildet werden.

Wird der Umschalter 18 in seine Linkslauf-Schaltstellung «L» geschwenkt, so verschiebt sich, wie gesagt, die Zahnstange 21 in Fig. 1 nach links. Damit schiebt sich der Stössel 45 mit seinem Stösselabschnitt 46 weiter in die Bohrung 47 im Spannhals 26 hinein. Bei seinem Vorschub verdrängt der Stössel 45 die Sperrkugel 49 vollständig aus der Bohrung 47. In der Linkslauf-Schaltstellung «L» des Umschalters 18 liegt der Stösselabschnitt 46 hinter der Sperrkugel 49 und verhindert ein Zurückschieben der Sperrkugel 49. Die Sperrkugel 49 steht an der Aufnahmefläche 27 vor und verhindert das Aufschieben eines Vorsatzgerätes.

Befindet sich der Umschalter 18 in der in Fig. 1 gezeigten Stellung, so ist das Aufschieben eines Vorsatzgerätes auf den Spannhals 26 möglich, da der Stössel 45 die in Fig. 5 dargestellte Lage einnimmt und die Sperrkugel 49 beim Aufschieben des Vorsatzgerätes soweit in die Bohrung 47 eingeschoben werden kann, dass sie an der Aufnahmefläche 27 nicht mehr vorsteht. Ist nunmehr das Vorsatzgerät auf dem Spannhals 26 festgespannt, so kann der Umschalter 18 nicht mehr in seine Linkslauf-Schaltstellung «L» verschwenkt werden, da sich in diesem Fall der Stössel 45 mit seinem keilartigen Ende gegen die Sperrkugel 49 schiebt. Da die Sperrkugel 49 von dem Vorsatzgerät in der in Fig. 5 gezeigten Stellung blockiert ist, wird eine weitere Verschiebung des Stössels 45 und damit ein Verschwenken des Umschalters 18 in Richtung seiner Linkslauf-Schaltstellung «L» verhindert.

Bei der Kombinationsmaschine gemäss dem Ausführungsbeispiel in Fig. 6 und 7 erstreckt sich ein in gleicher Weise mit der Zahnstange 21 verbundener Stössel 52 mit einem Stösselabschnitt 53 bis hin zur Aufnahmefläche 27 am Spannhals 26. Bei diesem Ausführungsbeispiel bildet der Stössel 52 auch gleichzeitig das bei dem ersten Ausführungsbeispiel der Kombinationsmaschine gesondert vorgesehene Sperrglied. Im Gehäuse 10 ist ausserhalb des Spannhalses 26 eine Durchtrittsöffnung 54 vorgesehen, durch welche der Stössel 52 mit seinem Stösselabschnitt 53 parallel zur Arbeitsspindel 11 und zur Aufnahmefläche 27 hindurchragt und sich tangential an der Aufnahmefläche 27 verschieben kann. In der einen Blockierstellung des Stössels 52 reicht das Stösselende 55 bis nahe an die Aufnahmefläche 27 (Fig. 7), während in der anderen Blockierstellung der Stösselabschnitt 53 die Aufnahmefläche 27 zumindest teilweise übergreift. Zur Führung des vorderen Stösselabschnittes 53 am Spannhals 26 ist an diesem eine sich axial erstreckende Führungsnut 56 vorgesehen.

Die Wirkungsweise dieser Variante der Sperrvorrichtung 28 ist im wesentlichen die gleiche wie vorstehend zur Fig. 4 und 5 beschrieben. Befindet sich der Umschalter 18 in seiner Linkslauf-Schaltstellung «L», so ist der Stösselabschnitt 53 so weit auf die Aufnahmefläche 27 vorgeschoben, dass ein Vorsatzgerät auf diese nicht aufgeschoben werden kann. Ist hingegen auf der Aufnahmefläche 27 bereits ein Vorsatzgerät aufgespannt, so liegt das Stösselende 55 des Stössels 52 unmittelbar vor der an der Aufnahmefläche 27 angreifenden Halterung des Vorsatzgerätes und wird durch diese an einer Verschiebung in Fig. 7 nach links gehindert. Damit kann auch der Umschalter 18 aus seiner in Fig. 1 dargestellten Position nicht in seine Linkslauf-Schaltstellung «L» verschwenkt werden.

## Patentansprüche

1. Motorgetriebenes Handwerkzeug, insbesondere Heimwerker-Kombinationsmaschine, mit einer im Gehäuse (10) gelagerten Arbeitsspindel (11), einem die Arbeitsspindel (11) in Rechts- und Linkslauf antreibenden Zahnradgetriebe (12) und einer an dem Zahnradgetriebe (12) angreifenden Drehrichtungs-Umschalteinrichtung, die einen zumindest in eine Rechtslauf- und eine Linkslauf-Schaltstellung überführbaren Umschalter (18) aufweist, gekennzeichnet durch eine Sperrvorrichtung (28), die mit dem Umschalter (18) gekoppelt ist und mindestens ein Sperrglied (29, 30) aufweist, das mit einer im Handwerkzeug gegebenenfalls vorhandenen Zusatzeinrichtung, wie Schlagbohrwerk (23) od.dgl., in Eingriff steht und/oder an der in unmittelbarer Nähe einer der Halterung von Vorsatzgeräten dienenden Aufnahmefläche (27) angeordnet ist, derart, dass bei Stellung des Umschalters (18) in seiner Linkslauf-Schaltstellung (L) das Einschalten der Zusatzeinrichtung (23) und/oder das Aufsetzen eines Vorsatzgerätes auf die Aufnahmefläche (27) und bei eingeschalteter Zusatzeinrichtung (23) und/oder angesetztem Vorsatzgerät das Überführen des Umschalters (18) in dessen Linkslauf-Schaltstellung (L) blockiert ist.

2. Handwerkzeug nach Anspruch 1, dadurch gekennzeichnet, dass das Sperrglied (29, 30) zwei Blockierstellungen aufweist und derart angeordnet und ausgebildet ist, dass es in die eine Blockierstellung durch Betätigen des Umschalters (18) und in die andere Blockierstellung durch Einschalten der Zusatzeinrichtung (23) und/oder durch Ansetzen des Vorsatzgerätes überführbar ist und in der jeweiligen Blockierstellung seine gegensinnige Betätigung blockiert.

3. Handwerkzeug nach Anspruch 1 oder 2, dadurch gekennzeichnet, dass die Sperrvorrichtung (28) mindestens einen mit dem Umschalter (18) getrieblich verbundenen Stössel (31, 45, 53) aufweist, der in Eingriff mit dem Sperrglied (29, 30) steht und eine Sperrglied-Betätigungsfläche (32, 50) und eine Rastfläche (33, 51) aufweist, hinter welche das Sperrglied (29, 30), die Stösselbewegung begrenzend, einfallen kann.

4. Handwerkzeug nach Anspruch 3, dadurch gekennzeichnet, dass der Stössel (31, 45) eine axial verschieblich geführte Zahnstange (21) aufweist und dass der Umschalter (18) schwenkbeweglich angeordnet ist und ein mit der Zahnstange (21) kämmendes Zahnsegment (20) aufweist.

5. Handwerkzeug nach Anspruch 3 oder 4, dadurch gekennzeichnet, dass die Sperrglied-Betätigungsfläche (32) zur Stösselachse schräggestellt angeordnet, vorzugsweise kegelmantelartig, ausgebildet ist und dass die Rastfläche (33) als am Stössel (31) quer abstehende, vorzugsweise die Sperrglied-Betätigungsfläche (32) stirnseitig begrenzende, vorzugsweise ringförmige Anschlagschulter (34) und das Sperrglied (29) als axial verschiebbarer, vorzugsweise quer zum Stössel (31) ausgerichteter Sperrstift (35) ausgebildet ist.

6. Handwerkzeug nach Anspruch 5, dadurch gekennzeichnet, dass ein ein Schlagbohrwerk (25) ein- und ausrückender Einstellbolzen (24) vorgesehen ist, der eine Verriegelungsnut (41), die nur in seiner Einrückstellung dem Sperrstift (35) zugekehrt ist, und mindestens eine an die Verriegelungsnut (41) in Verstellrichtung des Einstellbolzens (24) sich anschliessende, von dieser zur Aussenfläche (44) des Einstellbolzens (24) kontinuierlich überleitende Vertiefung (42) mit einer Sperrstift-Betätigungsfläche (43) aufweist, dass bei in Ausrückstellung stehendem Einstellbolzen (24) und in Rechtslauf-Schaltstellung stehendem Umschalter (18) der Sperrstift (35) eine Grundstellung einnimmt, in welcher sein eines Stirnende im Bereich der Vertiefung (42) liegt, ohne in die Verriegelungsnut (41) einzutauchen, und sein anderes Stirnende einen im wesentlichen der Anschlagschulterhöhe entsprechenden Abstand von dem Stössel (31) aufweist, und dass der Sperrstift (35) aus seiner Grundstellung in beide Richtungen entgegen Rückstellkraft ausschiebbar ausgebildet ist.

7. Handwerkzeug nach Anspruch 6, dadurch gekennzeichnet, dass am Sperrstift (35) zwei jeweils in einander entgegengesetzten Verschieberichtungen wirkende federelastische Rückstellglieder angreifen, die vorzugsweise als zylindrische Schraubfedern (37, 38) ausgebildet sind.

8. Handwerkzeug nach Anspruch 7, dadurch gekennzeichnet, dass der Sperrstift (35) in einer Gehäuse-Stufenbohrung (36) angeordnet und in dieser und in einer die Stufenbohrung (36) abschliessenden Verschlusshülse (40) geführt ist und dass sich die Schraubenfedern (37, 38) jeweils an der Stufenschulter der Stufenbohrung (36) bzw. an der Verschlusshülse (40) abstützen.

9. Handwerkzeug nach einem der Ansprüche 6 bis 8, dadurch gekennzeichnet, dass der Einstellbolzen (24) als Drehzapfen ausgebildet ist und die Ein- und Ausrückstellung für das Schlagbohrwerk (23) in Umfangsrichtung um ca. 180° gegeneinander versetzt angeordnet sind.

10. Handwerkzeug nach Anspruch 3, dadurch gekennzeichnet, dass der Stössel (45, 52) im Gehäuse (10) verschiebbar geführt ist und einen Stösselabschnitt (46, 53) aufweist, der sich bis hin zu der auf einem Gehäuse-Spannhals (26) angeordneten Aufnahmefläche (27) erstreckt.

11. Handwerkzeug nach Anspruch 10, dadurch gekennzeichnet, dass der Spannhals (26) eine parallel zur Arbeitsspindel (11) ausgerichtete Bohrung (47), in welche der Stösselabschnitt (46) eintaucht, und eine dazu quer angeordnete Käfigöffnung (48) aufweist, in welcher ein das Sperrglied (30) bildender Verriegelungskörper, insbesondere Sperrkugel (49), mit Radialspiel gehalten ist, der in der einen Blockierstellung des Sperrgliedes (30) in die Bohrung (47), die Stösselbewegung begrenzend, eintaucht und in der anderen Blockierstellung des Sperrgliedes (30) aus der Käfigöffnung (48), über die Aufnahmefläche (27) vorstehend, teilweise heraustritt.

12. Handwerkzeug nach Anspruch 11, dadurch gekennzeichnet, dass die Sperrgliedbetätigungsfläche (50) und die Rastfläche (51) von dem im wesentlichen keilartig auslaufenden Stirnende des Stössels (45) gebildet sind.

13. Handwerkzeug nach Anspruch 10, dadurch gekennzeichnet, dass Sperrglied und Stössel (52) einstückig sind und dass im Gehäuse (10) ausserhalb des Spannhalsbereiches eine Durchtrittsöffnung (54) vorgesehen ist, durch welche der Stösselabschnitt (53) parallel zur Arbeitsspindel (11), vorzugsweise die Aufnahmefläche (27) tangierend, hindurchragt und dass der Stösselabschnitt (53) in der einen Blockierstellung bis nahe an die Aufnahmefläche (27) reicht und in der anderen Blockierstellung die Aufnahmefläche (27) zumindest teilweise übergreift.

14. Handwerkzeug nach Anspruch 13, dadurch gekennzeichnet, dass in der Aufnahmefläche (27) eine sich in Achsrichtung erstreckende Führungsnut (56) vorgesehen ist, in welcher der Stösselabschnitt (53) zumindest teilweise geführt ist.

**Claims**

1. A motor driven hand tool, particularly a domestic combination machine, comprising a working spindle (11) mounted on the housing (10), a gear drive (12) driving the working spindle (11) clockwise and anti-clockwise and a device for changing the sense of rotation acting on the gear drive (12) and which has a change-over switch (18) which can be moved into at least one clockwise and one anti-clockwise switching position, characterised by a locking device (28) which is coupled to the change-over switch (18) and has at least one locking member (29, 30) which is in engagement with an additional device if necessary provided in the hand tool, such as a percussion drilling mechanism (23) or the like and/or is arranged in the immediate vicinity of a surface (27) serving to form the mounting for adaptors, in such a manner that, on positioning the change-over switch (18) in its anti-clockwise operating switching position (L) the switching-in of the additional device (23) and/or the mounting of an adaptor on the receiving surface (27) and with the additional device (23) switched in and/or a mounted adaptor, movement of the change-over switch (18) into its anti-clockwise switching position (L) is blocked.

2. A hand tool according to claim 1, characterised in that the locking member (29, 30) has two locking positions and is arranged and designed so that it can be moved into one blocking position by actuating the change-over switch (18) and into the other blocking position by switching-in the additional device (23) and/or by mounting the adaptor and in the respective blocking position it blocks its actuation in the opposite sense.

3. A hand tool according to claim 1 or 2, characterised in that the locking device (28) has at least one push rod (31, 45; 53) operably connected to the change-over switch (18) and which is in engagement with the locking member (29, 30) and has a locking member actuating surface (32, 50) and a latching surface (33, 51) behind which the locking member (29, 30) can drop, limiting the push rod movement.

4. A hand tool according to claim 3, characterised in that the push rod (31, 45) has an axially displaceably guided rack (21) and that the change-over switch (18) is arranged for pivotal movement and has a toothed segment (20) meshing with the rack (21).

5. A hand tool according to claim 3 or 4, characterised in that the locking member actuating surface (32) is arranged at an inclination to the push rod axis, preferably made bevelled, and that the latching surface (33) is preferably formed as an annular abutment shoulder (34) extending transversely on the push rod (31), preferably bounding the locking member actuating surface (32) at the end, and the locking member (29) is formed as an axially displaceable locking pin (35) preferably aligned transversely with respect to the push rod (31).

6. A hand tool according to claim 5, characterised in that an adjustable pin (24) is provided for switching the percussion drilling mechanism (25) in and out and has a locking groove (41) which faces the locking pin (35) only in its switched-out position and has at least one depression (42) provided with a locking pin actuating surface (43) adjoining the locking groove (41) in the adjustment direction of the adjusting pin (24) continually changing from the latter to the outer surface (44) of the adjusting pin (24), that with the adjusting pin (24) in the switched-out position and with the change-over switch (18) in the clockwise switching position, the locking pin (35) takes up a basic position in which one of its ends lies in the region of the depression (42) without entering the locking groove (41) and its other end is at a distance from the push rod (31) corresponding substantially to the level of the abutment shoulder and that the locking pin (35) is arranged for displacement out of its basic position in both directions against a return force.

7. A hand tool according to claim 6, characterised in that two resilient return members each acting in displacement directions opposite to one another and which are preferably formed as cylindrical helical springs (37, 38) engage the locking pin (35).

8. A hand tool according to claim 7, characterised in that the locking pin (35) is arranged in a stepped housing bore and is guided in a closure sleeve (40) closing the stepped bore (36) and that a respective one of the helical springs abuts against the stepped shoulder of the stepped bore (36) and one against the closure sleeve (40).

9. A hand tool according to one of claims 6 to 8, characterised in that the adjusting pin (24) is formed as a rotary pin and the in and out positions for the percussion drilling mechanism (23) are displaced from one another by substantially 180 degrees.

10. A hand tool according to claim 3, characterised in that the push rod (45, 52) is displaceably guided in the housing (10) and has a push rod section (46, 53) which extends up to the receiving surface (27) arranged on a housing clamping neck (26).

11. A hand tool according to claim 10, characterised in that the clamping neck (26) has a bore (47) aligned parallel to the working spindle (11) and into which the push rod section (46) penetrates, and a cage opening (48), arranged transversely with respect to the bore (47) and in which is retained, with radial clearance, a locking element forming the locking member (30), particularly a locking ball (49) which, in one blocking position of the locking member (30), limiting the movement of the push rod, penetrates into the bore (47) and in the other blocking position of the locking member (30) partially protrudes out of the cage opening (48), projecting beyond the receiving surface (27).

12. A hand tool according to claim 11, characterised in that the locking member actuating surface (50) and the latching surface (51) are formed by the substantially wedge-shaped end of the push rod (45).

13. A hand tool according to claim 10, characterised in that locking member and push rod (52) are integral and that an opening (54) is provided in the housing (10), outside the clamping neck, through which the push rod section (53) projects parallel to the working spindle (11), preferably tangentially to the receiving surface (27) and that, in one blocking position, the push rod section (53) extends into the vicinity of the receiving surface (27) and in the other blocking position, at least partially overlaps the receiving surface (27).

14. A hand tool according to claim 13, characterised in that an axially extending guide groove (56) in which the push rod section (53) is at least partially guided, is provided in the receiving surface (27).

**Revendications**

1. Outil portatif motorisé, notamment machine combinée pour travailleur à domicile, avec un axe porte-outil (11) monté dans un boîtier (10), une transmission à roues dentées (12) entraînant cet arbre (11) en rotation à droite et en rotation à gauche, et un dispositif de commutation du sens de rotation venant en prise sur la transmission à roues dentées (12) et qui comporte un commutateur (18) susceptible d'être transféré au moins dans une position pour la rotation à droite et dans une position pour la rotation à gauche, outil portatif caractérisé en ce qu'il comporte un dispositif de blocage (28) couplé avec le commutateur (18) et qui comprend au moins un organe de blocage (29, 30) qui est en prise avec un dispositif supplémentaire existant éventuellement sur l'outil portatif, tel qu'un mécanisme de perçage par percussion (23) ou analogue, et/ou qui est disposé de façon telle au voisinage immédiat d'une surface réceptrice (27) servant à maintenir des appareils placés en avant de cette surface, que lorsque le commutateur (18) est dans sa position de commutation (L) pour la rotation à gauche, l'enclenchement du dispositif supplémentaire (23) et/ou la mise en place d'un appareil placé en avant sur la surface réceptrice (27) sont bloqués, tandis que lorsque le dispositif supplémentaire (23) est enclenché et/ou que l'appareil placé en avant est mis en place, le transfert du commutateur (18) dans sa position de commutation (L) pour la rotation à gauche est bloqué.

2. Outil portatif selon la revendication 1, caractérisé en ce que l'organe de blocage (29, 30) comporte deux positions de blocage et est disposé et constitué de sorte qu'il est susceptible d'être transféré dans l'une des positions de blocage par manœuvre du commutateur (18) et dans l'autre position de blocage par enclenchement du dispositif supplémentaire (23) et/ou par mise en place de l'appareil placé en avant, tandis que dans chacune de ses positions de blocage, sa manœuvre en sens inverse est bloquée.

3. Outil portatif selon l'une quelconque des revendications 1 et 2, caractérisé en ce que le dispositif de blocage (28) comporte un poussoir (31, 45, 53) relié au commutateur (18) et entraîné par lui, ce poussoir étant en prise avec l'organe de blocage (29, 30) et comportant une surface de manœuvre (32, 50) de l'organe de blocage et une surface d'arrêt (33, 51) derrière laquelle l'organe de blocage (29, 30) peut venir se placer, en délimitant le déplacement du poussoir.

4. Outil portatif selon la revendication 3, caractérisé en ce que le poussoir (31, 45) comporte une crémaillère (21) guidée de façon à se déplacer axialement, tandis que le commutateur (18) est disposé de façon à pivoter et comporte un segment denté (20) engrenant avec la crémaillère (21).

5. Outil portatif selon l'une quelconque des revendications 3 et 4, caractérisé en ce que la surface de manœuvre (32) de l'organe de blocage est disposé obliquement par rapport à l'axe du poussoir, en revêtant de préférence la forme d'un cône, tandis que la surface d'arrêt (33) revêt la forme d'un épaulement de butée (34) de préférence de forme annulaire, partant transversalement du poussoir (31) et de préférence délimitant frontalement la surface de manœuvre (32) de l'organe de blocage, cependant que cet organe de blocage (29) revêt la forme d'une broche de blocage (35) orientée de préférence transversalement par rapport au poussoir (31) et susceptible de se déplacer axialement.

6. Outil portatif selon la revendication 5, caractérisé en ce qu'il est prévu un goujon de positionnement (24) enclenchant et déclenchant un mécanisme de perçages par percussion (25), ce goujon comportant une rainure de verrouillage (41) qui n'est tournée vers la broche de blocage (35) que dans la position d'enclenchement de ce goujon, lequel comporte également au moins une cavité (42) avec une surface de manœuvre (43) de la broche de blocage, cette cavité se raccordant à la rainure de verrouillage (41) dans la direction de déplacement du goujon de positionnement (24), et s'étendant de façon continue depuis cette rainure jusqu'à la surface externe (44) du goujon de positionnement (24), tandis que lorsque le goujon de positionnement (24) est dans sa position de déclenchement, et que le commutateur (18) est dans sa position de commutation pour la rotation à droite, la broche de blocage (35) prend une position de base dans laquelle l'une de ses extrémités frontales se situe au voisinage de la cavité (42) sans pénétrer dans la rainure de verrouillage (41), cependant que son autre extrémité frontale est à une distance du poussoir (31) correspondant essentiellement à la hauteur de l'épaulement de butée, la broche de blocage (35) étant susceptible d'être écartée dans les deux sens de sa position de base contre l'action de moyens de rappel.

7. Outil portatif selon la revendication 6, caractérisé en ce que deux organes de rappel élastiques agissant respectivement dans des sens de déplacement opposés, sont en prise sur la broche de blocage (35), ces organes revêtant de préférence la forme de ressorts à boudin cylindriques (37, 38).

8. Outil portatif selon la revendication 7, caractérisé en ce que la broche de blocage (35) est disposée dans un perçage épaulé (36) du boîtier, et est guidée dans celui-ci et dans une douille de fermeture (40) fermant le perçage épaulé (36), cependant que les ressorts à boudin (37, 38) prennent respectivement appui sur l'épaulement du perçage épaulé (36) ou bien sur la douille de fermeture (40).

9. Outil portatif selon l'une quelconque des revendications 6 à 8, caractérisé en ce que le goujon de positionnement (24) revêt la forme d'un goujon rotatif et que les positions d'enclenchement et de déclenchement pour le mécanisme de perçages par percussion (23) sont décalées l'une par rapport à l'autre d'environ 180° dans la direction périphérique.

10. Outil portatif selon la revendication 3, caractérisé en ce que le poussoir (45, 52) est guidé de façon à pouvoir coulisser dans le boîtier (10) et comporte une partie (46, 53) qui s'étend jusqu'à la surface réceptrice (27) ménagée sur un collet de bridage (26) du boîtier.

11. Outil portatif selon la revendication 10, caractérisé en ce que le collet de bridage (26) comporte un perçage (47) orienté parallèlement à l'arbre porte-outil (11) et dans lequel pénètre la partie (46) du poussoir, et un orifice en forme de cage (48) disposé transversalement par rapport à ce perçage et dans lequel est maintenu, avec un jeu radial, un corps de verrouillage constituant l'organe de blocage (30), notamment une bille de blocage (49), qui, dans l'une des positions de blocage de l'organe de blocage (30), pénètre dans le perçage (47) en limitant le déplacement du poussoir, tandis que dans l'autre position de blocage de l'organe de blocage (30), cette bille sort partiellement de l'orifice en forme de cage (48) en faisant saillie au-dessus de la surface réceptrice (27).

12. Outil portatif selon la revendication 11, caractérisé en ce que la surface de manœuvre (50) de l'organe de blocage et la surface d'arrêt (51) sont constituées par l'extrémité frontale, se terminant essentiellement en forme de coin du poussoir (45).

13. Outil portatif selon la revendication 10, caractérisé en ce que l'organe de blocage et le poussoir (52) constituent une seule pièce et qu'il est prévu dans le boîtier (10) en dehors de la zone du collet de bridage, un orifice traversant (54) à travers lequel passe la partie (53) du poussoir parallèle à l'arbre porte-outil (11), en étant de préférence tangente à la surface réceptrice (27), cependant que la partie (53) du poussoir dans l'une des positions de blocage de celui-ci, vient jusqu'au voisinage de la surface réceptrice (27), tandis que dans l'autre position de blocage elle empiète au moins partiellement sur cette surface réceptrice (27).

14. Outil portatif selon la revendication 13, caractérisé en ce qu'il est prévu dans la surface réceptrice (27) une rainure de guidage (56) s'étendant en direction axiale, rainure dans laquelle la partie (53) du poussoir est guidée au moins partiellement.

Fig. 1

II

IV

10

24

III

23

25

22

44

42

41

43

2  21  1  L

35

29

11

31  33

20

32

26  27  46

28  34

45

17

18

II

III

11

0 023 951

Fig. 2

Fig 3

Fig. 4

Fig. 5

Fig. 6

Fig. 7